# EUROPEAN PATENT APPLICATION

(11) **EP 4 564 563 A2**
(43) Date of publication of application: **04.06.2025**
(21) Application number: 23902571.1
(22) Date of filing: 07.12.2023
(51) Int. Cl.: H01M 50/30, H01M 50/392

(54) **PROTECTIVE MEMBER, AND PREPARATION METHOD FOR BATTERY CELL**

(30) Priority: 12.12.2022 CN 202211587841
(71) Applicant: Contemporary Amperex Technology (Hong Kong) Limited, Central, Hong Kong (CN)
(72) Inventor: QUAN, Chao, Ningde, Fujian 352100 (CN); PU, Yujie, Ningde, Fujian 352100 (CN); LI, Yao, Ningde, Fujian 352100 (CN); CHEN, Xiaobo, Ningde, Fujian 352100 (CN)
(74) Representative: Kraus & Lederer PartGmbB
(86) International application number: PCT/CN2023/136955
(87) International publication number: WO 2024/125375

(57) **Abstract**

The present application provides a method for preparing a battery cell, and a protective member that is for connecting to the battery cell. The battery cell includes a pressure relief mechanism, and the battery cell includes the pressure relief mechanism and a protective film arranged at an outer side of the pressure relief mechanism. The protective member is used for covering at least a part of the protective film from the outer side. In embodiments of the present application, the protective member is arranged on the outer side of the protective film, and arrangement of the protective member can reduce a risk of damage and deformation of the protective film in a preparation process of the battery cell, so as to reduce a probability that the pressure relief mechanism is damaged or contaminated by an electrolyte solution, so that the pressure relief mechanism can be actuated when internal pressure of the battery cell reaches a predetermined threshold, so as to ensure an normal operation of the pressure relief mechanism, and improve usage safety of the battery cell.

## Description

### CROSS-REFERENCE TO RELATED APPLICATIONS

The present application claims priority to Chinese Patent Application No. 202211587841.8, filed on December 12, 2022 and entitled "PROTECTIVE MEMBER AND METHOD FOR PREPARING BATTERY CELL", which is incorporated herein by reference in its entirety.

### TECHNICAL FIELD

The present application relates to the field of battery technologies, and in particular, to a protective member and a method for preparing a battery cell.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool. The battery cells may include a nickel-cadmium battery cell, a nickel-hydrogen battery cell, a lithium-ion battery cell, a secondary alkaline zinc-manganese battery cell, and the like.

In the development of battery technologies, how to improve safety of a battery cell is an important research topic in the battery technologies.

### SUMMARY

In view of the above problems, the present application provides a protective member and a method for preparing a battery cell, which can improve safety of a battery.

According to embodiments of the present application, a protective member is provided and is for connecting to a battery cell, where the battery cell includes a pressure relief mechanism, and the battery cell includes the pressure relief mechanism and a protective film arranged at an outside of the pressure relief mechanism; and the protective member is used for covering at least a part of the protective film from the outside.

In the foregoing solution, the protective member is arranged on the outer side of the protective film, and arrangement of the protective member can reduce a risk of damage and deformation of the protective film in a preparation process of the battery cell, so as to reduce a probability that the pressure relief mechanism is damaged or contaminated by an electrolyte solution, so that the pressure relief mechanism can be actuated when internal pressure of the battery cell reaches a predetermined threshold, so as to ensure an normal operation of the pressure relief mechanism, and improve usage safety of the battery cell.

In some embodiments, the protective member is provided with a vent hole, and the vent hole runs through the protective member along a thickness direction of the protective member; and the vent hole is used for communicating a space on the outer side of the protective member with a space between the protective film and the pressure relief mechanism when the protective member is connected to the battery cell.

In the foregoing solution, the vent hole is arranged to communicate the space between the protective film and the pressure relief mechanism with the space on the outer side of the protective member, so that while reducing the risk of damage and deformation of the protective film, a gas leakage detection requirement of the pressure relief mechanism is met, which has strong practicability.

In some embodiments, the protective film is provided with an exhaust channel, and the exhaust channel is communicated with the space between the protective film and the pressure relief mechanism; and the vent hole is used for communicating with the exhaust channel when the protective member is connected to the battery cell.

In the foregoing solution, by communicating with the exhaust channel, the vent hole implements the communication with the space between the protective film and the pressure relief mechanism, and meet the gas leakage detection requirement of the pressure relief mechanism, which has strong practicability.

In some embodiments, the vent hole is configured as follows: when the protective member is connected to the battery cell, a projection of the vent hole along the thickness direction at least partially overlaps a projection of the exhaust channel along the thickness direction.

In the foregoing solution, a communication capability between the vent hole and the exhaust channel can be improved, so as to ensure efficiency of exchange between air on the outer side of the protective member and the space between the protective film and the pressure relief mechanism, so as to balance an air pressure and reduce a risk that the protective film falls off or wrinkles and deforms. In addition, in a process of gas leakage detection of the pressure relief mechanism, this design can also ensure that specific gas can be effectively injected into a corresponding position of the pressure relief mechanism, and ensure subsequent effective detection of a gas concentration near the pressure relief mechanism, so as to improve accuracy of gas leakage detection.

In some embodiments, the protective member is provided with a plurality of vent holes.

In the foregoing solution, presence of the plurality of vent holes can improve communication effect between the space between the protective film and the pressure relief mechanism and the atmosphere, reduce the risk that the protective film falls off or wrinkles and deforms, and can also improve the accuracy of the gas leakage detection of the pressure relief mechanism.

In some embodiments, the plurality of vent holes are rotationally symmetric along a central axis of the protective member.

In the foregoing solution, because the plurality of vent holes are rotationally symmetric along the central axis, when the protective member is deflected at a specific angle for connecting to the battery cell, another vent hole can correspond to the exhaust channel, so as to meet requirements of gas communication or the gas leakage detection. This can reduce a probability of invalidity of the vent holes due to relative deflection or misalignment between the protective member and the battery cell, so as to reduce required accuracy of the connection between the protective member and the battery cell.

In some embodiments, the plurality of vent holes are centrosymmetric along the central axis of the protective member.

In the foregoing solution, the plurality of vent holes are centrosymmetric along the central axis of the protective member, so that when the protective member is attached reversely, a part of the vent holes can still communicate with the exhaust channel, so as to meet the requirements of the gas communication and the gas leakage detection. The protective member provided in the embodiments of the present application has strong adaptability and versatility, and can be applied to a plurality of situations.

In some embodiments, the protective member includes a substrate layer and a bonding layer arranged on a surface of the substrate layer.

In the foregoing solution, the substrate layer is fastened and connected to the battery cell by setting the bonding layer, and such a structure is simple and reliable. When the battery cell is moved or transported, a possibility that the protective member is detached from the battery cell can be reduced, so that the protective member can protect the protective film for a long time in the preparation process of the battery cell, and a preparation yield of batteries is improved.

In some embodiments, the protective film is connected to a shell of the battery cell, and the protective member is configured as follows: when the protective member is connected to the battery cell, connection strength between the protective member and the protective film is less than connection strength between the protective film and the shell.

In the foregoing solution, the connection strength between the protective member and the protective film is set to be less than the connection strength between the protective film and the shell, so that in a process of separating the protective member from the battery cell, because acting force between the protective member and the protective film is less than acting force between the protective film and the shell, the protective member cannot separate the protective film from the shell, which ensures that the protective film can cover the pressure relief mechanism to protect the pressure relief mechanism.

In some embodiments, the protective member is configured as follows: when the protective member is connected to the battery cell, the connection strength between the protective member and the protective film is less than connection strength between the protective member and the shell.

In the foregoing solution, in the process of separating the protective member from the battery cell, the protective member can be preferentially separated from the protective film, so as to reduce a probability that the protective film is displaced relative to the shell due to movement of the protective member, and ensure that the protective film can cover the pressure relief mechanism to protect the pressure relief mechanism.

In some embodiments, the protective film is connected to a first wall on the battery cell, the protective member includes a body portion and an extension portion protruding from the body portion, and the vent holes are provided on the body portion; and the protective member is configured as follows: when the protective member is connected to the first wall, the extension portion can protrude relative to the first wall.

In the foregoing solution, the extension portion is arranged, and the extension portion can protrude relative to the first wall for arrangement, so that when the protective member needs to be separated from the battery cell, the extension portion can be dragged to exert specific external force to the protective member, so as to separate the protective member from the battery cell. This reduces a risk that the protective member cannot be directly separated from the battery cell via the body portion because a connection between the body portion and the battery cell is too tight.

In some embodiments, when the protective member is connected to the battery cell, at least a partial structure of the extension portion is suspended.

In the foregoing solution, the at least partial structure of the extension portion is suspended for arrangement, so that when the protective member needs to be separated from the battery cell, the extension portions can be easily held and specific external force can be applied to the extension portions to separate the protective member from the battery cell. This design allows better application of the external force to the extension portions, and further reduces difficulty of the separation between the protective member and the battery cell.

In some embodiments, there are a plurality of extension portions, and the plurality of extension portions are separately arranged on two opposite edges of the body portion.

In the foregoing solution, the extension portion is used to help implement the separation between the protective member and the battery cell. On this basis, in embodiments of the present application, a plurality of extension portions are disposed, so that when some of the extension portions are invalid, the separation between the protective member and the battery cell can still be implemented via other extension portions.

Further, the plurality of extension portions are also located on the two opposite edges of the body portion. The extension portions in this case can also be used for positioning to a specific extent, a relative position relationship between the protective member and the battery cell is determined via the plurality of extension portions that are arranged opposite to each other, and accuracy of positions of the two is improved, so that the protective member can better protect the pressure relief mechanism and the protective film.

In some embodiments, a protruding distance of the extension portion relative to the first wall is D, and D satisfies: 8 mm ≤ D ≤ 10 mm.

In the foregoing solution, the protruding distance D of the extension portion relative to the first wall is set to range from 8 mm to 10 mm, so that it is satisfied that the protective member can be easily separated from the battery cell, and a risk that the protective member is separated from the battery cell due to external factors is reduced.

According to a second aspect, an embodiment of the present application provides a method for preparing a battery cell, where the battery cell includes a pressure relief mechanism and a protective film arranged on an outer side of the pressure relief mechanism, and the preparation method includes:
connecting a protective member to the battery cell and using the protective member to cover at least a part of the protective film from the outer side;
injecting liquid to the battery cell; and
separating the protective member from the battery cell.

In some embodiments, the protective member includes a body portion and an extension portion protruding from the body portion; during the connecting the protective member to the battery cell, at least a partial structure of the extension portion protrudes or is suspended relative to the battery cell for arrangement; and during the separating the protective member from the battery cell, force is applied to the at least partial structure that is of the extension portion and that protrudes or is suspended relative to the battery cell, so as to separate the protective member from the battery cell.

In the foregoing solution, the at least partial structure of the extension portion protrudes or is suspended relative to the battery cell for arrangement, so that when the protective member needs to be separated from the battery cell, the extension portion can be easily held and specific force is applied to the extension portion to separate the protective member from the battery cell. This design allows better application of the force to the extension portions, and further reduces difficulty of the separation between the protective member and the battery cell.

The foregoing description is merely an overview of the technical solutions of the present application. The following describes specific embodiments of the present application illustratively to enable a clearer understanding of the technical solutions of the present application, enable implementation of the technical solutions based on the content of the specification, and make the foregoing and other objectives, features, and advantages of the present application more evident and comprehensible.

### BRIEF DESCRIPTION OF DRAWINGS

To describe the technical solutions of the embodiments of the present application more clearly, the following outlines the drawings used in the embodiments of the present application. Evidently, the drawings outlined below are merely a part of embodiments of the present application. A person of ordinary skill in the art may derive other drawings from the outlined drawings without making any creative efforts.
FIG. 1 is a schematic exploded diagram of a battery cell according to an embodiment of the present application;
FIG. 2 is a schematic structural diagram of a protective member according to an embodiment of the present application;
FIG. 3 is a schematic structural diagram of cooperation between the protective member and the battery cell according to an embodiment of the present application;
FIG. 4 is a schematic structural diagram of a protective film in the battery cell according to an embodiment of the present application;
FIG. 5 is a schematic structural diagram of another protective film in the battery cell according to an embodiment of the present application;
FIG. 6 is a schematic structural diagram of another protective member according to an embodiment of the present application;
FIG. 7 is a schematic structural diagram of still another protective member according to an embodiment of the present application;
FIG. 8 is a schematic structural sectional diagram along an A-A line shown in FIG. 6; and
FIG. 9 is a flowchart of a method for preparing a battery cell according to an embodiment of the present application.

List of reference numerals:
10. Battery cell; 11. Shell; 111. Housing; 112. End cap; 12. Electrode assembly; 13. Electrode terminal; 14. Current collecting member; 15. Pressure relief mechanism; 16. Protective film;
20. Protective member; 21. Vent hole; 22. Substrate layer; 23. Bonding layer; 24. Body portion; 25. Extension portion;
T. Exhaust channel;
A. Vent area;
O. Central axis;
B. First wall;
X. First direction; Y. Second direction; Z. Thickness direction.

### DETAILED DESCRIPTION OF EMBODIMENTS

Embodiments of the technical solution of the present application are described in detail below in conjunction with the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The terms "include" and "contain" and any variations thereof used in the specification, claims, and brief description of drawings of the present application are intended as non-exclusive inclusion.

In the description of the embodiments of the present application, the terms "first", "second", and the like are merely intended to distinguish between different objects, and shall not be understood as any indication or implication of relative importance or any implicit indication of the number, particular sequence or primary-secondary relationship of the technical features indicated. In the descriptions of the embodiments of the present application, "a plurality of" means two or more, unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of the embodiments of the present application, the term "and/or" describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

In the description of embodiments of the present application, the term "a plurality of" means two or more (including two). Similarly, "a plurality of groups" means two or more groups (including two groups), and "a plurality of pieces" means two or more pieces (including two pieces).

In the description of embodiments of the present application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of the present application, but not intended to indicate or imply that the indicated device or component is necessarily located in the specified direction or constructed or operated in the specified direction. Therefore, such terms are not to be understood as a limitation on embodiments of the present application.

In the descriptions of the embodiments of the present application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. A person of ordinary skill in the art can understand specific meanings of these terms in the embodiments of the present application as appropriate to specific situations.

The term "and/or" in the present application merely indicates an association relationship for describing related objects, and represents three possible relationships. For example, A and/or B may represent the following three circumstances: A alone, both A and B, and B alone. In addition, the character "/" in the present application generally indicates an "or" relationship between the front and back related objects.

In the embodiments of the present application, the same reference numerals indicate the same components, and detailed descriptions of the same components are omitted in different embodiments for the sake of brevity. Understandably, dimensions, such as thickness, length, and width of various components in the embodiments of the present application shown in the accompanying drawings, and dimensions, such as overall thickness, length, and width of an integrated apparatus are merely illustrative descriptions, but do not constitute any limitation on the present application.

"A plurality of" in the present application refers to more than two (including two). In the present application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, and this is not limited in the embodiments of the present application. The battery cell may be in cylindrical, flat, cuboid, or other shapes, and this is not limited in the embodiments of the present application. The battery cell is generally classified, based on packaging manners, into three types: a cylindrical battery cell, a prismatic battery cell, and a pouch-type battery cell, and this is not limited in the embodiments of the present application.

A battery mentioned in the embodiments of the present application refers to a single physical module that includes one or more battery cells to provide a higher voltage and capacity. For example, the battery mentioned in the present application may include a battery, a battery pack, or the like. The battery generally includes a box for packaging one or more battery cells. The box can prevent liquid or other foreign matter from affecting charging or discharging of the battery cells.

The battery cell includes an electrode assembly and an electrolyte solution. The electrode assembly is composed of a positive electrode plate, a negative electrode plate and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. A part of the positive current collector not coated with the positive active material layer protrudes from a part of the positive current collector coated with the positive active material layer. The part of the positive current collector not coated with the positive active material layer serves as a positive tab. Taking a lithium-ion battery as an example, a material of the positive current collector may be aluminum, and the positive active material may be lithium cobalt oxide, lithium iron phosphate, ternary lithium, lithium manganate, or the like. The negative electrode plate includes a negative current collector and a negative active material layer. A surface of the negative current collector is coated with the negative active material layer. A part of the negative current collector not coated with the negative active material layer protrudes from a part of the negative current collector coated with the negative active material layer. The part of the negative current collector not coated with the negative active material layer serves as a negative tab. A material of the negative current collector may be copper, and the negative active material may be carbon, silicon, or the like. In order to ensure passage of a high current without fusing off, the positive tab is plural in number and stacked together. A material of the separator may be polypropylene (PP), polyethylene (PE), or the like. In addition, the electrode assembly may be of a jelly-roll structure, and may also be of a stacked structure, which is not limited in the embodiments of the present application.

The battery cell further includes a shell, and the shell is configured to accommodate the electrode assembly and the electrolyte solution. The shell includes a housing and an end cap connected to the housing, and the housing and the end cap form an accommodation cavity to accommodate the electrode assembly and the electrolyte solution.

The development of the battery technology needs to allow for a plurality of design factors, including performance parameters such as energy density, cycle life, discharge capacity, charge rate, and discharge rate, and also needs to ensure safety of the battery.

A pressure relief mechanism on the battery cell exerts an important effect on the safety of the battery cell. For example, in a case of a short circuit, overcharge, or the like, thermal runaway may occur inside the battery cell, resulting in a surge in pressure. In this case, the internal pressure may be released outward through the actuation of the pressure relief mechanism to prevent explosion and fire of the battery cell.

The pressure relief mechanism refers to an element or component that is actuated to relieve an internal pressure or temperature when the internal pressure or temperature of the battery cell reaches a preset threshold. The threshold varies depending on design requirements. The threshold may depend on the material of one or more of the positive electrode plate, the negative electrode plate, the electrolyte solution and the separator in the battery cell. The internal pressure of the battery cell is a pressure inside the shell.

The pressure relief mechanism may be in a form such as an explosion-proof valve, an air valve, a pressure relief valve, or a safety valve, and can specifically adopt pressure-sensitive elements or structures. To be specific, when the internal pressure of the battery cell reaches the predetermined threshold, the pressure relief mechanism performs an action or a fragile part provided in the pressure relief mechanism is cracked, so as to form an opening or a channel that can be used for internal pressure relief. The fragile part can be formed in a manner such as setting a notch, a groove, or a material with small strength.

"Actuated" mentioned in the present application means that the pressure relief mechanism performs an action or is activated to a given state so that the internal pressure of the battery cell is relieved. The action performed by the pressure relief mechanism may include, but is limited to, rupturing, shattering, tearing, or bursting open at least a part of the pressure relief mechanism, or the like. When the pressure relief mechanism is actuated, high-temperature and high-pressure substances inside the battery cell will be expelled as emissions out of an actuated position. In this way, the pressure of the battery cell can be relieved under a circumstance of a controllable pressure to avoid potential severer accidents.

The emissions out of the battery cell mentioned in the present application include but are not limited to: electrolyte solution, melted or split positive and negative electrode plates, fragments of the separator, reaction-induced high-temperature and high-pressure gases, flames, and the like.

The inventor notices that during cycling of the battery cell, the pressure relief mechanism may be actuated or be invalid prematurely when the internal pressure of the battery cell does not reach the threshold. Based on this problem, the inventor finds, through research, that a protective film is provided on an outer side of the pressure relief mechanism to protect the pressure relief mechanism, but in a preparation process of the battery cell, the protective film is prone to be scratched and bumped, and consequently, deforms, warps, or even falls off. In addition, in a process of injecting an electrolyte solution, an electrolyte solution remaining on a processing table or an electrolyte solution that falls on the shell during injection is prone to adhere to the protective film and affect an appearance, and may also go deep along an edge of the protective film to a position of the pressure relief mechanism and contact with the pressure relief mechanism, resulting in corrosion of the pressure relief mechanism and affecting an actuation threshold of the pressure relief mechanism. Consequently, the pressure relief mechanism may be actuated or be invalid prematurely when the internal pressure of the battery cell does not reach the predetermined threshold, which affects normal usage of the battery and cause potential safety hazards.

To resolve the above problems found by the inventor, the present application provides a protective member. A risk of damage and deformation of a protective film is reduced via the protective member, thereby reducing impact of a preparation process on a pressure relief mechanism.

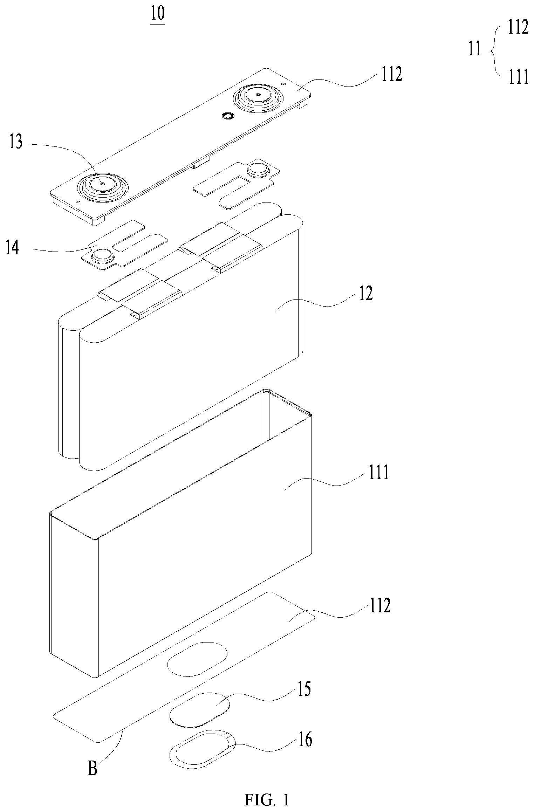

Referring to FIG. 1, which is a schematic exploded diagram of a battery cell 10 according to an embodiment of the present application. As shown in FIG. 1, the battery cell 10 includes a shell 11 and an electrode assembly 12, and the electrode assembly 12 is accommodated in the shell 11.

The electrode assembly 12, as a core component for functions of charging and discharging of the battery cell 10, includes a positive electrode plate, a negative electrode plate and a separator. The positive electrode plate and the negative electrode plate are of opposite polarities. The separator is configured to dielectrically separate the positive electrode plate from the negative electrode plate. The electrode assembly 12 works primarily by relying on shuttling of metal ions between the positive electrode plate and the negative electrode plate.

The shell 11 is of a hollow structure and internally forms an accommodation cavity for accommodating the electrode assembly 12 and the electrolyte solution. The shell 11 may have various shapes, such as a cylinder or a cuboid. The shape of the shell 11 may be determined depending on the specific shape of the electrode assembly 12. For example, if the electrode assembly 12 is of a cylindrical structure, a cylindrical shell 11 may be selected; and if the electrode assembly 12 is of a cuboidal structure, a cuboidal shell 11 may be selected.

In some embodiments, the shell 11 includes a housing 111 and an end cap 112. The end cap 112 is hermetically connected to the housing 111 to form an accommodation space for accommodating the electrode assembly 12 and the electrolyte solution. In some examples, the housing 111 has an opening at one end, and one end cap 112 is disposed and fits and covers the opening of the housing 111. In some other examples, the housing 111 has openings at both opposite ends, two end caps 112 are disposed, and the two end caps 112 fit and cover the two openings of the housing 111 respectively.

Without limitation, the end cap 112 may adapt to the housing 111 in shape so as to fit the housing 111. Optionally, the end cap 112 may be made of a material with specified hardness and strength (for example, an aluminum alloy). Thus, the end cap 112 is less likely to deform when subjected to extrusion and collision, allowing the battery cell 10 to have higher structural strength and improved safety performance.

The housing 111 may have various shapes and sizes, such as a cuboid, a cylinder, or a hexagonal prism. Specifically, the shape of the housing 111 may be determined depending on the specific shape and size of the electrode assembly 12. The housing 111 may be made of various materials such as copper, iron, aluminum, stainless steel, or aluminum alloy, which are not particularly limited in these embodiments of the present application.

In some embodiments, functional components such as electrode terminals 13 may be provided on the end cap 112. The electrode terminal 13 can be used for electrically connecting to the electrode assembly 12 for outputting or inputting electrical energy of the battery cell 10. Optionally, a current collecting member 14 is also provided in the shell 11, and the current collecting member 14 is used for implementing the electrical connection between the electrode assembly 12 and the electrode terminal 13.

In some embodiments, the shell 11 is provided with a pressure relief mechanism 15. When thermal runaway occurs in the electrode assembly 12, high-temperature gas produced in the losing control inside the housing 111 can reach the position of the pressure relief mechanism 15, the pressure relief mechanism 15 is pushed open under an action of impact force, and the high-temperature gas can be released in a timely manner to ensure subsequent usage of the battery cell 10. It should be noted that the pressure relief mechanism 15 can be provided on the end cap 112 or may alternatively be provided on the housing 111, which is not limited in the embodiments of the present application.

Further, in some embodiments, a protective film 16 is arranged on an outer side of the pressure relief mechanism 15, and the protective film 16 can protect the pressure relief mechanism 15.

In order to reduce a possibility that the pressure relief mechanism 15 is abnormal because the protective film 16 is damaged and deformed due to external factors in a preparation process of the battery cell 10, according to the embodiments of the present application, a protective member 20 is provided, and a structure of the protective member 20 is described in detail below with reference to the accompanying drawings.

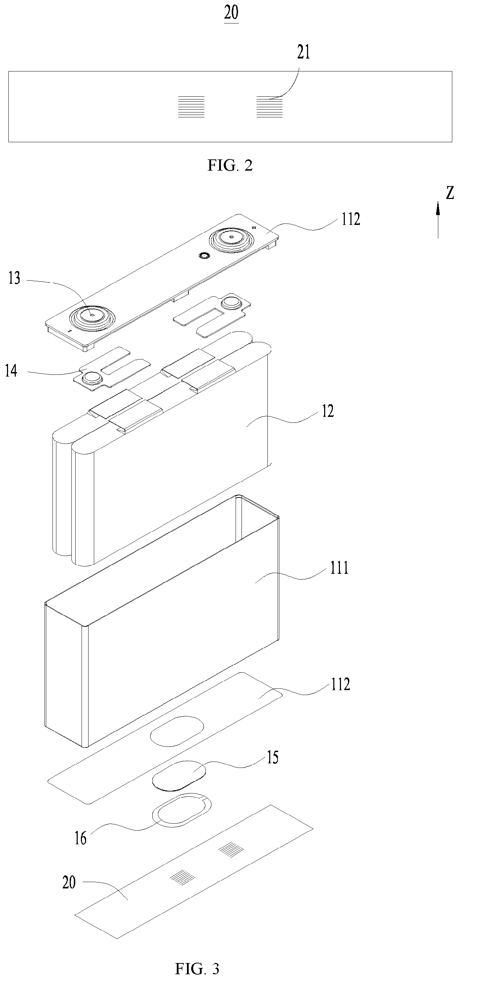

Refer to FIG. 1 to FIG. 3. The protective member 20 is for connecting to the battery cell 10, where the battery cell 10 includes the pressure relief mechanism 15 and the battery cell 10 includes the pressure relief mechanism 15 and the protective film 16 arranged at the outer side of the pressure relief mechanism 15; and the protective member 20 is used for covering at least a part of the protective film 16 from the outer side.

The pressure relief mechanism 15 on the battery cell 10 has an important influence on safety of the battery cell 10. For example, when a phenomenon such as a short circuit or overcharge occurs, thermal runaway may occur inside the battery cell 10 and the pressure rises sharply. In this case, the internal pressure can be released outwards by actuation of the pressure relief mechanism 15, so as to prevent the battery cell 10 from exploding or firing.

The pressure relief mechanism 15 is a component or a part that is actuated when the internal pressure or an internal temperature of the battery cell 10 reaches a predetermined threshold, to relieve the internal pressure or temperature. Threshold designs vary with different design needs. The threshold may depend on one or more of materials of a positive electrode plate, a negative electrode plate, an electrolyte solution, or a separator in the battery cell 10. The internal pressure of the battery cell 10 is internal pressure of the shell 11.

The pressure relief mechanism 15 may be in a form such as an explosion-proof valve, an air valve, a pressure relief valve, or a safety valve, and can specifically adopt pressure-sensitive elements or structures. To be specific, when internal pressure of the battery cell 10 reaches a predetermined threshold, the pressure relief mechanism 15 performs an action or a fragile part provided in the pressure relief mechanism 15 is cracked, so as to form an opening or a channel that can be used for internal pressure relief. The fragile part can be formed by setting a notch, a groove, or a material with small strength.

The "actuate" mentioned in the present application means that the pressure relief mechanism 15 performs an action or is activated to a specific state, so that the internal pressure of the battery cell 10 can be released. The action performed by the pressure relief mechanism 15 may include, but is not limited to: at least a part of the pressure relief mechanism 15 is cracked, broken, torn, open, or the like. When the pressure relief mechanism 15 is actuated, high-temperature and high-pressure substance inside the battery cell 10 is discharged outwards from an actuation part as a discharge. In this manner, the battery cell 10 can be depressurized under a condition of controllable pressure, so as to avoid a potential severer accident from happening.

The emissions out of the battery cell 10 mentioned in the present application include but are not limited to: electrolyte solution, melted or split positive and negative electrode plates, fragments of the separator, reaction-induced high-temperature and high-pressure gases, flames, and the like.

The protective film 16 is used for protecting the pressure relief mechanism 15, and specifically, the protective film 16 can prevent a sharp object from destroying the pressure relief mechanism 15, prevent liquid such as the electrolyte solution from polluting and corroding the pressure relief mechanism 15, or prevent foreign objects, dust, and the like from falling into the pressure relief mechanism 15 and affecting an appearance of the battery cell 10. For example, the protective film 16 may be a PET (Polyethylene terephthalate) film. The PET film is also known as a high-temperature resistant polyester thin film. Plasticity, tensile strength, and impact resistance strength of the protective film 16 can be improved by using the PET film to prepare the protective film 16, so that a structure of the protective film 16 is stable, and a risk of deformation of the protective film 16 after long-term usage is reduced.

The protective member 20 can cover the at least part of the protective film 16 from the outer side. The "outer side" mentioned herein refers to an outer side of the entire battery cell 10, namely, a side that is of the protective film 16 and that is away from the pressure relief mechanism 15 for the protective film 16. The protective member 20 can cover the at least part of the protective film 16, in other words, there is an overlapping area between orthographic projection of the protective member 20 on the protective film 16 and the protective film 16. The orthographic projection of the protective member 20 on the protective film 16 can only partially overlap the protective film 16, or can alternatively completely cover the protective film 16 for arrangement.

The protective member 20 is connected to the battery cell 10, and a connection manner includes but is not limited to adhesion and the like. The protective member 20 can be directly connected to the protective film 16, or the protective member 20 can alternatively be connected to a structure other than the protective film 16 in the battery cell 10.

The protective member 20 has a plurality of structural size forms, and a contour shape of the protective member 20 can be the same as a contour shape of the protective film 16, or can alternatively be different from a contour shape of the protective film 16. A thickness of the protective member 20 can be greater than a thickness of the protective film 16, or can alternatively be less than or equal to a thickness of the protective film 16. For example, the thickness of the protective member 20 can be greater than the thickness of the protective film 16, so that in the preparation process of the battery cell 10, the protective member 20 can better protect the protective film 16 and reduce the risk of damage and deformation of the protective film 16 due to the external factors.

In addition, the protective member 20 has a plurality of material forms, and can adopt a material the same as that of the protective film 16, or can alternatively adopt a material different from that of the protective film 16. For example, the protective member 20 includes an anti-corrosion material, and the anti-corrosion material can reduce influence of the electrolyte solution on the protective member 20 and reduce a probability of protection invalidity of the protective member 20. In addition, the protective member 20 can also include a material with strong structural strength, and the structural strength refers to a capability of the material to resist a damage of external force. A stronger structural strength indicates greater maximum external force that the protective member 20 can bear, so that influence of the external force on the protective film 16 can be reduced, and the risk that the protective film 16 is scratched and bumped, and consequently, deforms, warps, or even falls off is reduced.

The protective member 20 provided in these embodiments of the present application is applicable to a preparation or transportation process of the battery cell 10, and can better protect the protective film 16 and the pressure relief mechanism 15. It should be noted that, based on an actual usage situation, the protective member 20 provided in the embodiments of the present application can alternatively be applied to other scenarios, and this is not limited in the embodiments of the present application. For example, in a process of using the battery cell 10, the battery cell 10 may be provided with the protective member 20, or may not be provided with the protective member 20.

In these embodiments of the present application, the protective member 20 is arranged on the outer side of the protective film 16, and arrangement of the protective member 20 can reduce the risk of damage and deformation of the protective film 16 in the preparation process of the battery cell 10, so as to reduce a probability that the pressure relief mechanism 15 is damaged or contaminated by an electrolyte solution, so that the pressure relief mechanism 15 can be actuated when the internal pressure of the battery cell 10 reaches the predetermined threshold, so as to ensure an normal operation of the pressure relief mechanism 15, and improve usage safety of the battery cell 10.

In some embodiments, as shown in FIG. 1 to FIG. 3, the protective member 20 is provided with a vent hole 21, and the vent hole 21 runs through the protective member 20 along a thickness direction of the protective member 20; and the vent hole 21 is used for communicating a space on the outer side of the protective member 20 with a space between the protective film 16 and the pressure relief mechanism 15 when the protective member 20 is connected to the battery cell 10.

In the preparation process of the battery cell 10, a gas leakage situation of the pressure relief mechanism 15 in the battery cell 10 is usually needs to be detected in a manner such as gas detection. Specifically, during the gas detection, air near the pressure relief mechanism 15 is evacuated and specific gas of a specific pressure, for example, helium, is used for filling. Then, the specific gas near the pressure relief mechanism 15 is evacuated, or the battery cell 10 is transferred to another operating location. After standing for a period of time, a concentration of the specific gas around the pressure relief mechanism 15 is detected via an instrument. If the detection concentration is lower than a preset value, it indicates that the pressure relief mechanism 15 does not have a gas leakage phenomenon; or if the detection concentration is higher than a preset value, it indicates that there is a gas leakage problem at the position of the pressure relief mechanism 15.

The protective film 16 covers the pressure relief mechanism 15 for arrangement, in order to ensure that a gas detection process is carried out effectively. Normally, the protective film 16 and the pressure relief mechanism 15 are arranged at intervals, and there is a specific space between the two. If the pressure relief mechanism 15 has the gas leakage problem, the space can be communicated with an interior of the battery cell 10 through a gas leakage position of the pressure relief mechanism 15, so that the gas leakage detection of the pressure relief mechanism 15 can be implemented via the space between the protective film 16 and the pressure relief mechanism 15.

On this basis, in the embodiments of the present application, the protective member 20 is provided with a vent hole 21, and the vent hole 21 runs through the protective member 20 along a thickness direction Z for arrangement. There may be one or more vent holes 21. A shape and a size of the vent hole 21 are not limited in the embodiments of the present application. For example, the vent hole 21 may be a circular hole, a polygonal hole, or in another irregularly shaped through-hole structure, or the vent hole 21 may alternatively be in a narrow-slit structure. Alternatively, in some embodiments, the vent hole 21 is a notch structure located at an edge position of the protective member 20, in other words, the vent hole can be formed by inward caving on the edge position of the protective member 20.

In addition, a position of the vent hole 21 relative to the protective film 16 can have a plurality of cases. For example, a projection of the vent hole 21 in the thickness direction Z can overlap a projection of the protective film 16 in the thickness direction Z, or can alternatively be dislocated with a projection of the protective film 16 in the thickness direction Z. The "projection of the vent hole 21 in the thickness direction Z" mentioned in the embodiments of the present application refers to an orthographic projection of the vent hole 21 on a plane perpendicular to the thickness direction Z. This is the same for the projection of the protective film 16 in the thickness direction Z, and details are not repeatedly described in the embodiments of the present application.

The space between the protective film 16 and the pressure relief mechanism 15 can be communicated with the vent hole 21. Further, presence of the vent hole 21 can implement communicating the space between the protective film 16 and the pressure relief mechanism 15 with the space on the outer side of the protective member 20, and the "space on the outer side of the protective member 20" mentioned herein refers to: after the protective member 20 is connected to the battery cell 10, a space on one side that is of the protective member 20 and that is away from the battery cell 10.

In the embodiments of the present application, arrangement of the vent hole 21 can communicate the space between the protective film 16 and the pressure relief mechanism 15 with the space on the outer side of the protective member 20, so that while reducing the risk of damage and deformation of the protective film 16, a gas leakage detection requirement of the pressure relief mechanism 15 is met, which has strong practicability.

In some embodiments, refer to FIG. 1, FIG. 2, and FIG. 4. The protective film 16 is provided with an exhaust channel T, and the exhaust channel T is communicated with the space between the protective film 16 and the pressure relief mechanism 15; and the vent hole 21 is used for communicating with the exhaust channel T when the protective member 20 is connected to the battery cell 10.

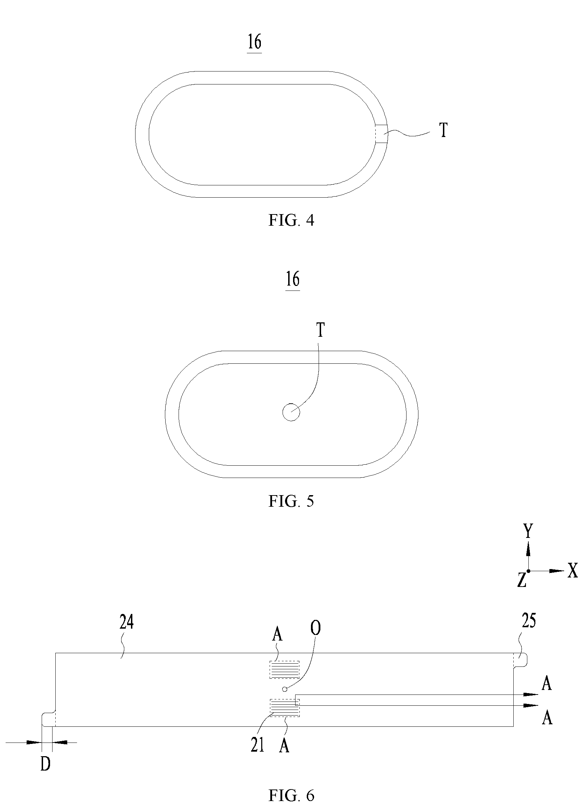

The exhaust channel T allows gas to pass through, and the exhaust channel T has many forms. For example, in a direction from the pressure relief mechanism 15 to the protective film 16, the exhaust channel T penetrates for protection and arrangement. In this case, as shown in FIG. 5, the exhaust channel T can be of a through-hole structure, and has a shape that includes but is not limited to a circular hole, a triangular hole, a square hole, and the like. Alternatively, a part of edge positions of the protective film 16 are connected to the shell 11 of the battery cell 10, and at another edge position, a surface that is of the protective film 16 and that faces the pressure relief mechanism 15 is concave to form a recess in a direction away from the pressure relief mechanism 15, the recess is not connected to the shell 11, and the recess is arranged at intervals with the shell 11, so that the exhaust channel T as shown in FIG. 4 is formed at the recess.

The exhaust channel T is arranged, to communicate the space between the protective film 16 and the pressure relief mechanism 15 with other spaces, so as to meet a gas leakage detection requirement of the pressure relief mechanism 15. In addition, communicating the space between the protective film 16 and the pressure relief mechanism 15 with the atmosphere can also be ensured, so as to balance air pressure, reduce a risk of the protective film 16 that the protective film 16 falls off or wrinkles and deforms because of a high temperature that causes the air pressure to increase in a preparation or usage process of the battery cell 10.

The vent hole 21 can communicate with the exhaust channel T, and a position relationship between the vent hole 21 and the exhaust channel T is not limited in the embodiments of the present application. For example, the projection of the vent hole 21 in the thickness direction Z can overlap a projection of the exhaust channel T in the thickness direction Z, or the projection of the vent hole 21 in the thickness direction Z can alternatively be dislocated with a projection of the exhaust channel T in the thickness direction Z, provided that it is satisfied that when the protective member 20 is connected to the battery cell 10, the vent hole 21 and the exhaust channel T can communicate with each other.

In the embodiments of the present application, by communicating with the exhaust channel T, the vent hole 21 implements the communication with the space between the protective film 16 and the pressure relief mechanism 15, and meet the gas leakage detection requirement of the pressure relief mechanism 15, which has strong practicability.

In some embodiments, the vent hole 21 is configured as follows: when the protective member 20 is connected to the battery cell 10, a projection of the vent hole 21 along the thickness direction Z at least partially overlaps a projection of the exhaust channel T along the thickness direction Z.

The structure of the vent hole 21 and the structure of the exhaust channel T have a plurality of forms. The structures of the two can be the same or different. For example, the vent hole 21 and the exhaust channel T are both of narrow-slit structures, or one of the vent hole 21 and the exhaust channel T is of a narrow-slit structure and the other is of a through-hole structure, or both the two are of through-hole structures.

The projection of the vent hole 21 in the thickness direction Z overlaps the projection of the exhaust channel T in the thickness direction Z, where the projection of the vent hole 21 in the thickness direction Z can cover the projection of the exhaust channel T in the thickness direction Z, or the projection of the exhaust channel T in the thickness direction Z can alternatively cover the projection of the vent hole 21 in the thickness direction Z, or the projection of the vent hole 21 in the thickness direction Z only partially overlaps the projection of the exhaust channel T in the thickness direction Z.

Parts where the vent hole 21 and the exhaust channel T overlap in the thickness direction Z can implement directly communicating the vent hole 21 with the exhaust channel T, in other words, gas can directly enter the overlapping part of the exhaust channel T through the overlapping part of the vent hole 21, and in this process, the gas flows only in the vent hole 21 and the exhaust channel T, and does not need to go through another additional path.

In such a design, a communication capability between the vent hole 21 and the exhaust channel T can be improved, so as to ensure efficiency of exchange between air on the outer side of the protective member 20 and the space between the protective film 16 and the pressure relief mechanism 15, so as to balance an air pressure and reduce a risk that the protective film 16 falls off or wrinkles and deforms. In addition, in a process of gas leakage detection of the pressure relief mechanism 15, this design can also ensure that specific gas can be effectively injected into a corresponding position of the pressure relief mechanism 15, and ensure subsequent effective detection of a gas concentration near the pressure relief mechanism 15, so as to improve accuracy of the gas leakage detection.

In some embodiments, the protective member 20 is provided with a plurality of vent holes 21.

The plurality of vent holes 21 are arranged at intervals on the protective member 20, and an arrangement manner of the plurality of vent holes 21 is not limited in the embodiments of the present application. For example, the plurality of vent holes 21 may be arranged side by side along a single direction, or the plurality of vent holes 21 may be arranged in an array along both directions. A shape and a size of the plurality of vent holes 21 may be the same or different. Spacing between adjacent vent holes 21 can be the same or different.

In the embodiments of the present application, presence of the plurality of vent holes 21 can improve communication effect between the space between the protective film 16 and the pressure relief mechanism 15 and the atmosphere, reduce the risk that the protective film 16 falls off or wrinkles and deforms, and can also improve the accuracy of the gas leakage detection of the pressure relief mechanism 15.

In addition, compared with a solution of only one vent hole 21, the arrangement of the plurality of vent holes 21 can reduce a size of each vent hole 21 to a specific extent, so as to reduce a risk that impurities such as a foreign body and dust fall to the protective film 16 through the vent hole 21 in the preparation process of the battery cell 10, so as to further reduce a risk that the protective film 16 is scratched and bumped due to external factors, and consequently, deforms, warps, or even falls off.

In some embodiments, refer to FIG. 1 and FIG. 6. The plurality of vent holes 21 are rotationally symmetric along a central axis O of the protective member 20.

The "central axis O" in the embodiments of the present application refers to: an axis that passes through a center position of the protective member 20 and is parallel to the thickness direction Z. The plurality of vent holes 21 are rotationally symmetric along the central axis O, and a rotation angle includes but is not limited to 30°, 60°, 90°, 120°, and 180°.

It should be noted that, in embodiments of the present application, rotational symmetry may be performed on one vent hole 21 along the central axis O, to form the plurality of vent holes 21. Alternatively, the plurality of vent holes 21 may be arranged side by side on the protective member 20 to jointly form a vent area A, and rotational symmetry is performed on the vent area A along the central axis O for distribution, to form a plurality of vent areas A.

This design can improve reliability of cooperation between the vent hole 21 and the exhaust channel T. Specifically, due to influence of factors such as an operation error, in a process of connecting the protective member 20 to the battery cell 10, it is possible that the protective member 20 cannot completely correspond to the battery cell 10 for connection, and the protective member 20 may be deflected at a specific angle or be partially dislocated relative to the battery cell 10. In this case, the vent hole 21 that should correspond to the exhaust channel T may be misaligned with the exhaust channel T, resulting in a case that the vent hole 21 cannot meet a communication requirement between the space between the pressure relief mechanism 15 and the protective film 16 and the atmosphere.

In the embodiments of the present application, because the plurality of vent holes 21 are rotationally symmetric along the central axis O, when the protective member 20 is deflected at a specific angle for connecting to the battery cell 10, another vent hole 21 can correspond to the exhaust channel T, so as to meet requirements of gas communication or the gas leakage detection. This can reduce a probability of invalidity of the vent holes 21 due to relative deflection or misalignment between the protective member 20 and the battery cell 10, so as to reduce required accuracy of the connection between the protective member 20 and the battery cell 10.

In some embodiments, as shown in FIG. 1 and FIG. 6, the plurality of vent holes 21 are centrosymmetric along the central axis O of the protective member 20.

The "centrosymmetric" mentioned in the embodiments of the present application means that a part of the vent holes 21 can coincide with another part of the vent holes 21 after being rotated 180 ° around the central axis O. For example, the vent holes 21 can be of narrow-slit structures and extend along a first direction X, a plurality of narrow-slit structures are arranged at intervals in a second direction Y to form a vent area A, there are two vent areas A, the two vent areas A are centrosymmetric along the central axis O for arrangement, and each two of the first direction X, the second direction Y, and the thickness direction Z are perpendicular to each other.

In the process of connecting the protective member 20 to the battery cell 10, in addition to a case in which the protective member 20 may be deflected or dislocated relative to the battery cell 10, there is also a possibility that the protective member 20 may be attached reversely For example, the protective member 20 has a first surface and a second surface that are opposite to each other in the thickness direction Z. Usually, the first surface of the protective member 20 is used for connecting to the battery cell 10. In this case, the first surface is located on one side that is of the second surface and that is close to the battery cell 10, and a vent hole 21 in a first vent area A can be communicated with the exhaust channel T. When the protective member 20 is attached reversely, the second surface of the protective member 20 is connected to the battery cell 10, and the second surface is located on one side that is of the first surface and that is close to the battery cell 10. In this case, the vent hole 21 in the first vent area A cannot communicate with the exhaust channel T, but because a second vent area A and the first vent area A are centrosymmetric along the central axis O for arrangement, a vent hole 21 located in the second vent area A can communicate with the exhaust channel T, so that a ventilation requirement is satisfied.

In conclusion, in the embodiments of the present application, the plurality of vent holes 21 are centrosymmetric along the central axis O of the protective member 20, so that when the protective member 20 is attached reversely, a part of the vent holes 21 can still communicate with the exhaust channel T, so as to meet requirements of gas communication and gas leakage detection. The protective member 20 provided in the embodiments of the present application has strong adaptability and versatility, and can be applied to a plurality of situations.

In some embodiments, refer to FIG. 1, and FIG. 6 to FIG. 8. The protective member 20 includes a substrate layer 22 and a bonding layer 23 arranged on a surface of the substrate layer 22.

The substrate layer 22 is a most main component of the protective member 20, the substrate layer 22 is mainly used for protecting the protective film 16, and the vent holes 21 can be arranged on the substrate layer 22. A material of the substrate layer 22 is not limited in the embodiments of the present application. For example, the substrate layer 22 may include a metal material such as copper and iron, so that the substrate layer 22 can have greater structural strength, so as to meet purposes of impact resistance and scratch resistance.

The bonding layer 23 is arranged on the surface of the substrate layer 22, the bonding layer 23 includes but is not limited to an adhesive tape, and the bonding layer 23 is used for implementing relative fastening between the substrate layer 22 and the battery cell 10. The bonding layer 23 can completely cover the surface of the substrate layer 22, or can be arranged on only a partial structure of the surface of the substrate layer 22, and this is not limited in the embodiments of the present application. For example, a vent hole 21 on the bonding layer 23 and a vent hole on the substrate layer 22 are dislocated to reduce influence of the bonding layer 23 on a ventilation function of the vent hole 21.

In the embodiments of the present application, the substrate layer 22 is fastened and connected to the battery cell 10 by setting the bonding layer 23, and such a structure is simple and reliable. When the battery cell 10 is moved or transported, a possibility that the protective member 20 is detached from the battery cell 10 can be reduced, so that the protective member 20 can protect the protective film 16 for a long time in a preparation process of the battery cell 10, and a preparation yield of batteries is improved.

In some embodiments, the protective film 16 is connected to the shell 11 of the battery cell 10, and the protective member 20 is configured as follows: when the protective member 20 is connected to the battery cell 10, connection strength between the protective member 20 and the protective film 16 is less than connection strength between the protective film 16 and the shell 11.

A connection manner between the protective film 16 and the shell 11 includes but is not limited to adhesion, welding, and the like, and in some usage scenarios of the battery cell 10, the protective member 20 and the battery cell 10 are separated. In a separation process, because the protective member 20 has specific connection strength with a partial structure on the battery cell 10, the partial structure on the battery cell 10 may be separated from the battery cell 10 together with the protective member 20. Consequently, problems occur in the battery cell 10. For example, if the protective member 20 and the protective film 16 have strong connection strength, in a process of separating the protective member 20 from the battery cell 10, the protective film 16 may be separated from the battery cell 10 together with the protective member 20. Consequently, the protective film 16 cannot continue to protect the pressure relief mechanism 15, and a potential safety hazard is caused.

On this basis, in the embodiments of the present application, the connection strength between the protective member 20 and the protective film 16 is set to be less than the connection strength between the protective film 16 and the shell 11, so that in a process of separating the protective member 20 from the battery cell 10, because acting force between the protective member 20 and the protective film 16 is less than acting force between the protective film 16 and the shell 11, the protective member 20 cannot separate the protective film 16 from the shell 11, which ensures that the protective film 16 can cover the pressure relief mechanism 15 to protect the pressure relief mechanism 15.

It should be noted that the entire protective member 20 can be completely connected to the battery cell 10, in other words, an entire structure of the protective member 20 is connected to the battery cell 10, or the protective member 20 is alternatively only partially connected to the battery cell 10. This is not limited in the embodiments of the present application. When the protective member 20 is only partially connected to the battery cell 10, the protective member 20 may not be connected with the protective film 16, and the connection strength between the protective member 20 and the protective film 16 is 0 in this case.

In some embodiments, the protective member 20 is configured as follows: when the protective member 20 is connected to the battery cell 10, the connection strength between the protective member 20 and the protective film 16 is less than connection strength between the protective member 20 and the shell 11.

Specifically, the protective member 20 is more prone to be separated from the protective film 16 rather than the shell 11. For example, the protective member 20 is only partially connected to the battery cell 10, and the protective member 20 is not connected to the protective film 16. In this design, in the process of separating the protective member 20 from the battery cell 10, the protective member 20 can be preferentially separated from the protective film 16, so as to reduce a probability that the protective film 16 is displaced relative to the shell 11 due to movement of the protective member 20, and ensure that the protective film 16 can cover the pressure relief mechanism 15 to protect the pressure relief mechanism 15.

In some embodiments, refer to FIG. 1 and FIG. 6. The protective film 16 is connected to a first wall B of the battery cell 10, the protective member 20 includes a body portion 24 and extension portions 25 protruding from the body portion 24, and the vent holes 21 are provided on the body portion 24; and the protective member 20 is configured as follows: when the protective member 20 is connected to the first wall B, the extension portions 25 can protrude relative to the first wall B.

The shell 11 may include the end cap 112 and the housing 111, and the pressure relief mechanism 15 may be arranged on the end cap 112 or may alternatively be on the housing 111. When the pressure relief mechanism 15 is arranged on the end cap 112, the protective film 16 is connected to the end cap 112, and the first wall B is a partial structure of the end cap 112. When the pressure relief mechanism 15 is arranged on the housing 111, the protective film 16 is connected to the housing 111, and the first wall B is a partial structure of the housing 111.

The protective member 20 includes the body portion 24 and the extension portions 25, and the body portion 24 corresponds to the first wall B for arrangement, where the body portion 24 can completely cover the first wall B for arrangement, or the body portion 24 can alternatively only cover a partial structure of the first wall B. The extension portion 25 is connected to the body portion 24, and the two are connected in a manner that includes but is not limited to adhesion, welding, or the like, or the two can alternatively be of an integrated structure. The body portion 24 and the extension portions 25 can all be partial structures in the substrate layer 22.

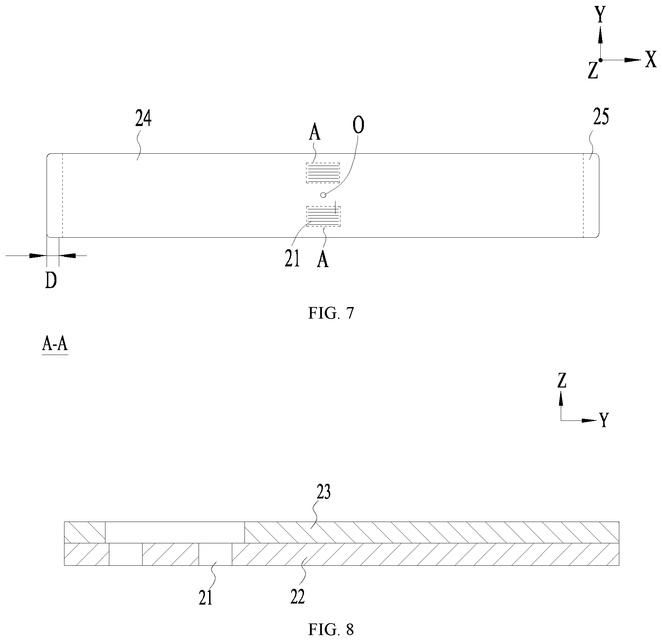

A size of the extension portion 25 is not limited in the embodiments of the present application. In an example, as shown in FIG. 6, a width size of the extension portion 25 may be less than a width size of the body portion 24. Alternatively, as shown in FIG. 7, a width size of the extension portion 25 may be equal to a width size of the body portion 24. Of course, in some other embodiments, a width size of the extension portion 25 may alternatively be greater than a width size of the body portion 24.

The extension portions 25 can protrude relative to the first wall B, and the extension portions 25 may only partially protrude from the first wall B, or the extension portions 25 may completely protrude from the first wall B. Specifically, when the body portion 24 completely covers the first wall B, the extension portions 25 completely protrude from the first wall B; or when the body portion 24 only covers the partial structure of the first wall B, partial structures in the extension portions 25 cover the first wall B, and other partial structures protrude from the first wall B for arrangement.

In some optional embodiments, at least partial structures in the extension portions 25 can be bent relative to the body portion 24, so that at least the partial structures in the extension portions 25 can be connected and fastened to another surface that is of the shell 11 and that intersects the first wall B.

It needs to be noted that when the protective member 20 includes the bonding layer 23, the bonding layer 23 can be arranged on the extension portions 25, so that the extension portions 25 are adhered and fastened to the another surface that is of the shell 11 and that intersects the first wall B, or an adhesive part is arranged on the body portion 24, so that the body portion 24 is adhered and fastened to the first wall B, or adhesive parts can alternatively be arranged on all the extension portions 25 and the body portion 24. This is not limited in the embodiments of the present application.

In addition, the extension portion 25 is formed by protruding outwards from an edge of the body portion 24, and the extension portion 25 may be arranged at any edge position of the body portion 24. For example, as shown in the figure, when the body portion 24 is of a rectangular structure, the extension portions 25 can be arranged on at least one side of the body portion 24 in a length direction. Likewise, alternatively, the extension portions 25 may be arranged on at least one side of the body portion 24 in a width direction.

In the embodiments of the present application, the extension portion 25 is arranged, and the extension portion 25 can protrude relative to the first wall B for arrangement, so that when the protective member 20 needs to be separated from the battery cell 10, the extension portion 25 can be dragged to exert specific external force to the protective member 20, so as to separate the protective member 20 from the battery cell 10. This reduces a risk that the protective member 20 cannot be directly separated from the battery cell 10 via the body portion 24 because a connection between the body portion 24 and the battery cell 10 is too tight.

In some embodiments, when the protective member 20 is connected to the battery cell 10, at least a partial structure of the extension portion 25 is suspended.

The "suspended" mentioned in the embodiments of the present application means: After the protective member 20 is connected to the battery cell 10, the at least partial structure of the extension portion 25 is a free end, and is not connected and fastened to the shell 11 of the battery cell 10. Optionally, when the protective member 20 is connected to the battery cell 10, the extension portions 25 are completely suspended.

In the embodiments of the present application, the at least partial structure of the extension portion 25 is suspended for arrangement, so that when the protective member 20 needs to be separated from the battery cell 10, the extension portions 25 can be easily held and specific external force can be applied to the extension portions 25 to separate the protective member 20 from the battery cell 10. This design allows better application of the external force to the extension portions 25, and further reduces difficulty of the separation between the protective member 20 and the battery cell.

In some embodiments, there are a plurality of extension portions 25, and the plurality of extension portions 25 are separately arranged on two opposite edges of the body portion 24.

It can be seen from the foregoing content that, the extension portion 25 is used to help implement the separation between the protective member 20 and the battery cell 10. On this basis, in embodiments of the present application, a plurality of extension portions 25 are disposed, so that when some of the extension portions 25 are invalid, the separation between the protective member 20 and the battery cell 10 can still be implemented via other extension portions 25.

Further, the plurality of extension portions 25 are also located on the two opposite edges of the body portion 24. The extension portions 25 in this case can also be used for positioning to a specific extent, a relative position relationship between the protective member 20 and the battery cell 10 is determined via the plurality of extension portions 25 that are arranged opposite to each other, and accuracy of positions of the two is improved, so that the protective member 20 can better protect the pressure relief mechanism 15 and the protective film 16.

In some embodiments, as shown in FIG. 1 and FIG. 6, a protruding distance of the extension portion 25 relative to the first wall B is D, and D satisfies: 8 mm ≤ D ≤ 10 mm. For example, D is one of 8 mm, 8.5 mm, 9 mm, 9.5 mm, and 10 mm.

When the protruding distance of the extension portion 25 relative to the first wall B is too small, there is a probability that it is difficult to grasp the extension portion 25, which causes difficulty in separating the protective member 20 from the battery cell 10, and affects production efficiency. When the protruding distance of the extension portion 25 relative to the first wall B is too large, after the protective member 20 is connected to the battery cell 10, a risk that the protective member 20 falls off due to external factors such as scratching of the extension portions 25 is prone to occur, which is not conducive to long-time protection of the protective member 20 to the battery cell 10.

Therefore, in the embodiments of the present application, the protruding distance D of the extension portion 25 relative to the first wall B is set to range from 8 mm to 10 mm, so that it is satisfied that the protective member 20 can be easily separated from the battery cell 10, and a risk that the protective member 20 is separated from the battery cell 10 due to the external factors is reduced.

It needs to be noted that, when the body portion 24 completely covers the first wall B, the extension portions 25 completely protrude from the first wall B, and the protruding distance of the extension portion 25 relative to the first wall B is an integral size of the extension portion 25 in this case; or when the body portion 24 only covers the partial structure of the first wall B, partial structures in the extension portions 25 cover the first wall B, other partial structures protrude from the first wall B for arrangement, and the protruding distance of the extension portion 25 relative to the first wall B is a size of the partial structure in the extension portion 25 in this case.

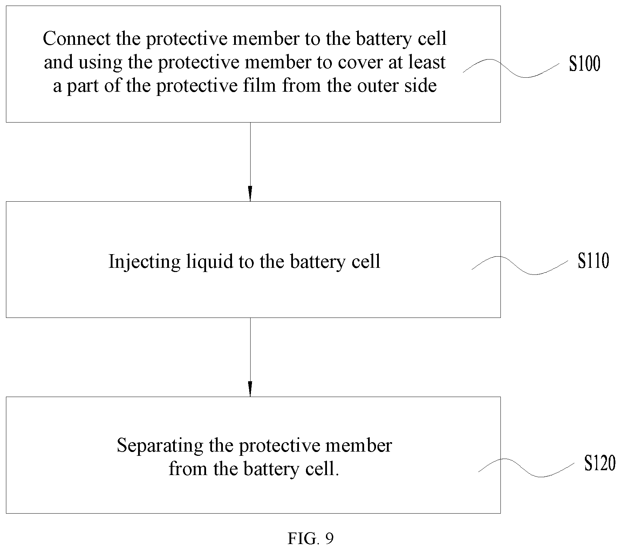

According to a second aspect, refer to FIG. 9. Embodiments of the present application provide a method for preparing a battery cell, and the preparation method includes the following steps.

S100: Connecting a protective member to a battery cell and using the protective member to cover at least a partial structure of a protective film from an outer side.

In the step S100, the protective member is arranged on the outer side of the protective film, and arrangement of the protective member can reduce a risk of damage and deformation of the protective film in a preparation process of the battery cell, so as to reduce a probability that the pressure relief mechanism is damaged, so that the pressure relief mechanism can be actuated when internal pressure of the battery cell reaches a predetermined threshold, so as to ensure an normal operation of the pressure relief mechanism, and improve usage safety of the battery cell.

S110: Injecting liquid to the battery cell.

In the step S110, during the injection of an electrolyte solution, an electrolyte solution that remains on a processing table or an electrolyte solution that falls on a shell during injection is prone to move to a position near a corresponding position of the protective film in the battery cell. Nevertheless, due to presence of the protective member, a probability of contact between the electrolyte solution and the protective film or the pressure relief mechanism is reduced, so as to reduce a probability that the pressure relief mechanism and the protective film are contaminated by the electrolyte solution, and improve safety of the battery cell.

It needs to be noted that step S100 and step S110 can be two sequential steps in a preparation process of the battery cell, in other words, the liquid injection operation is carried out immediately after the protective member is connected to the battery cell. Alternatively, other processes may be included between the step S100 and the step S110, such as an operation of entering an electrode assembly into the shell, and a welding operation of a top cover and a housing that are in the shell. Such a design can reduce a risk of damage and cracking of the protective film due to the other processes, and improve a preparation yield of battery cells.

S120: Separating the protective member from the battery cell.

In the step S120, after liquid injection into the battery cell is completed, the protective member can be selectively separated from the battery cell, in other words, the protective member may not be arranged in a finished product that is of the battery cell and that is finally generated. Of course, in some other embodiments, based on an actual situation requirement, the protective member may not be separated from the battery cell, and this is not particularly limited in embodiments of the present application.

It should be noted that step S110 and step S120 can be two sequential steps in the preparation process of the battery cell, in other words, the protective member is separated from the battery cell immediately after liquid injection. Alternatively, other processes may be included between steps S110 and S120. Optionally, the step S120 can be a last step in the preparation process of the battery cell.

In some embodiments, the protective member 20 includes a body portion 24 and an extension portion 25 protruding from the body portion 24. In the step S100, at least a partial structure of the extension portion 25 protrudes or is suspended relative to the battery cell 10 for arrangement. In the step S120, force is applied to the at least partial structure that is of the extension portion 25 and that protrudes or is suspended relative to the battery cell 10, to separate the protective member 20 from the battery cell 10.

In the embodiments of the present application, the at least partial structure of the extension portion 25 protrudes or is suspended relative to the battery cell 10 for arrangement, so that when the protective member 20 needs to be separated from the battery cell 10, the extension portion 25 can be easily held and specific force is applied to the extension portion 25 to separate the protective member 20 from the battery cell 10. This design allows better application of the external force to the extension portion 25, and further reduces difficulty of the separation between the protective member 20 and the battery cell.

According to some embodiments of the present application, refer to FIG. 1, FIG. 4, and FIG. 6 to FIG. 8. The protective member 20 is used for the battery cell 10, a battery includes the pressure relief mechanism 15 and the protective film 16, the protective film 16 is arranged on the outer side of the pressure relief mechanism 15 and is connected to the first wall B on the shell 11, and the protective member 20 is used for covering at least the part of the protective film 16 from the outer side.

The protective member 20 includes the substrate layer 22 and the bonding layer 23, and the bonding layer 23 is arranged on the surface of the substrate layer 22 and is used for implementing the connection between the substrate layer 22 and the battery cell 10. The substrate layer 22 includes the body portion 24 and the extension portions 25 protruding from the body portion 24, there are the plurality of extension portions 25, and the plurality of extension portions 25 are separately arranged on the opposite two edges of the body portion 24.

The body portion 24 is provided with the vent hole 21, the vent hole 21 is plural in number, the plurality of vent holes 21 are centrosymmetric along the central axis O of the protective member 20 for arrangement, and at least a part of the vent holes 21 are configured as follows: when the protective member 20 is connected to the battery cell 10, the projection of the vent hole 21 along the thickness direction Z at least partially overlaps the projection of the exhaust channel T on the protective film 16 along the thickness direction Z.

Finally, it is hereby noted that the foregoing embodiments are merely for describing the technical solutions of the present application rather than for limiting the present application. Although the present application has been described in detail with reference to the foregoing embodiments, a person of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments may be combined in any manner. The present application is not limited to the specific embodiments disclosed herein but includes all technical solutions falling within the scope of the claims.

## Claims

1. A protective member, for connecting to a battery cell, wherein the battery cell comprises a pressure relief mechanism and a protective film arranged at an outer side of the pressure relief mechanism; and
the protective member is used for covering at least a part of the protective film from the outer side.

2. The protective member according to claim 1, wherein the protective member is provided with a vent hole, and the vent hole runs through the protective member along a thickness direction of the protective member; and
the vent hole is used for communicating a space on the outer side of the protective member with a space between the protective film and the pressure relief mechanism when the protective member is connected to the battery cell.

3. The protective member according to claim 2, wherein the protective film is provided with an exhaust channel, and the exhaust channel is communicated with the space between the protective film and the pressure relief mechanism; and
the vent hole is used for communicating with the exhaust channel when the protective member is connected to the battery cell.

4. The protective member according to claim 3, wherein the vent hole is configured as follows: when the protective member is connected to the battery cell, a projection of the vent hole along the thickness direction at least partially overlaps a projection of the exhaust channel along the thickness direction.

5. The protective member according to any one of claims 2 to 4, wherein the protective member is provided with a plurality of vent holes.

6. The protective member according to claim 5, wherein the plurality of vent holes are rotationally symmetric along a central axis of the protective member.

7. The protective member according to claim 6, wherein the plurality of vent holes are centrosymmetric along the central axis of the protective member.

8. The protective member according to any one of claims 1 to 7, wherein the protective member comprises a substrate layer and a bonding layer arranged on a surface of the substrate layer.

9. The protective member according to any one of claims 1 to 8, wherein the protective film is connected to a shell of the battery cell; and
the protective member is configured as follows: when the protective member is connected to the battery cell, connection strength between the protective member and the protective film is less than connection strength between the protective film and the shell.

10. The protective member according to claim 9, wherein the protective member is configured as follows: when the protective member is connected to the battery cell, the connection strength between the protective member and the protective film is less than connection strength between the protective member and the shell.

11. The protective member according to any one of claims 1 to 10, wherein the protective film is connected to a first wall on the shell of the battery cell, the protective member comprises a body portion and an extension portion protruding from the body portion, and the vent hole is provided on the body portion; and
the protective member is configured as follows: when the protective member is connected to the first wall, the extension portion can protrude relative to the first wall.

12. The protective member according to any one of claims 1 to 11, wherein the protective member comprises the body portion and the extension portion protruding from the body portion, and when the protective member is connected to the battery cell, at least a partial structure of the extension portion is suspended.

13. The protective member according to claim 11 or 12, wherein there are a plurality of extension portions, and the plurality of extension portions are separately arranged on two opposite edges of the body portion.

14. The protective member according to any one of claims 11 to 13, wherein a protruding distance of the extension portion relative to the first wall is D, and D satisfies: 8 mm ≤ D ≤ 10 mm.

15. A method for preparing a battery cell, wherein the battery cell comprises a pressure relief mechanism and a protective film arranged on an outer side of the pressure relief mechanism, and the preparation method comprises:
connecting a protective member to the battery cell and using the protective member to cover at least a part of the protective film from the outer side;
injecting liquid to the battery cell; and
separating the protective member from the battery cell.

16. The preparation method according to claim 15, **characterized in that**, the protective member comprises a body portion and an extension portion protruding from the body portion; during the connecting the protective member to the battery cell, at least a partial structure of the extension portion protrudes or is suspended relative to the battery cell for arrangement; and
during the separating the protective member from the battery cell, force is applied to the at least partial structure that is of the extension portion and that protrudes or is suspended relative to the battery cell, so as to separate the protective member from the battery cell.
